# EUROPÄISCHE PATENTSCHRIFT

(11) **EP 2 120 084 B1**
(45) Veröffentlichungstag und Bekanntmachung des Hinweises auf die Patenterteilung: **01.02.2017**
(21) Anmeldenummer: 09006424.7
(22) Anmeldetag: 13.05.2009
(51) Int. Cl.: G02B 27/01

(54) **Projektionsvorrichtung**
Projection device
Dispositif de projection

(30) Priorität: 17.05.2008 DE 102008024060
(43) Veröffentlichungstag der Anmeldung: 18.11.2009
(73) Patentinhaber: Bayerische Motoren Werke Aktiengesellschaft, 80809 München (DE)
(72) Erfinder: FRANZ, Gunnar, 85521 Ottobrunn (DE)

(56) Entgegenhaltungen:
- US-A1- 2006 012 884
- US-A1- 2007 112 444
- US-B1- 6 402 321

## Beschreibung

Die Erfindung betrifft eine Projektionsvorrichtung zur Darstellung von optischen Informationen mittels Einspiegelung eines virtuellen Bildes in das Blickfeld des Fahrers eines Kraftfahrzeugs, umfassend eine Bilderzeugungseinrichtung zur Erzeugung von die optische Information enthaltenden Lichtstrahlen, zumindest ein optisches Element zur Beeinflussung des Strahlengangs der Lichtstrahlen zwischen der Bilderzeugungseinrichtung und einer als Combiner wirkenden Windschutzscheibe des Kraftfahrzeugs.

Solche Vorrichtungen werden auch als Head-up-Display bezeichnet.

Aus der US 2007/0182536 A1 ist es bekannt, ein Head-up-Display derart zu gestalten, dass es aus dem Kraftfahrzeug herausnehmbar ist. Es wird dadurch auch unabhängig von dem Kraftfahrzeug als externe Projektionsvorrichtung, etwa zu Hause oder im Büro, nutzbar.

Bisher weitgehend ungelöst sind jedoch Gestaltungsfragen, die sich aus der Diskrepanz der Anforderungen zwischen dem Betrieb im Kraftfahrzeug und dem Betrieb als externe Projektionsvorrichtung ergeben.

**Aus der** US 6402321 **ist ein Head-up-Display mit einer als Unterbaugruppe ausgeführten Projektionseinheit bekannt.**

Es ist eine Aufgabe der Erfindung, eine einfache auf die beiden genannten Anwendungsfälle abgestimmte Ausgestaltung einer Projektionsvorrichtung zu schaffen.

Gelöst wird diese Aufgabe durch eine Vorrichtung gemäß Patentanspruch 1. Vorteilhafte Ausführungsformen und Weiterbildungen der Erfindung ergeben sich aus den abhängigen Ansprüchen.

Die erfindungsgemäße Projektionsvorrichtung besteht als Gesamtvorrichtung aus einer ersten lösbar mit dem Kraftfahrzeug verbundenen Teilvorrichtung und einer zweiten fahrzeugfesten Teilvorrichtung. Die erste (lösbar mit dem Kraftfahrzeug verbundene) Teilvorrichtung umfasst zumindest die Bilderzeugungseinrichtung der Gesamtvorrichtung und ist außerhalb des Kraftfahrzeugs unabhängig von der zweiten Teilvorrichtung als externe Projektionsvorrichtung betreibbar. Bei dem Betrieb der ersten Teilvorrichtung als externe Projektionsvorrichtung ist zumindest ein erstes optisches Element optisch wirksam, welches auch in der Gesamtvorrichtung den Strahlengang der Lichtstrahlen beeinflusst. Insbesondere kann dieses erste optische Element im Betrieb der ersten Teilvorrichtung als externe Projektionsvorrichtung als Objektiv der externen Projektionsvorrichtung dienen. Dabei sind die optischen Eigenschaften dieses ersten optischen Elementes vorzugsweise so gewählt, dass eine Projektion eines Bildes von einem Projektionsdisplay auf vorzugsweise ebene Flächen wie z.B. Wände, Tische etc. ein weitgehend unverzerrtes bzw. "gerades" Bild ergibt. Dies kann gegebenenfalls unter Nutzung bekannter Bildanpassungsverfahren, wie z.B. Keystone-Korrektur, erreicht werden. Die zweite Teilvorrichtung umfasst zumindest ein zweites optisches Element, welches in der Gesamtvorrichtung den Strahlengang der Lichtstrahlen derart beeinflusst, dass eine optische Wirkung des ersten optischen Elements zumindest teilweise kompensiert wird bzw. derart ergänzt wird, dass nach Projektion auf die Windschutzscheibe des Fahrzeugs ein weitgehend unverzerrtes bzw. "gerades" Bild im gewünschten Projektionsabstand entsteht.

Durch das zumindest eine zweite optische Element wird eine optische Wirkung des ersten optischen Elements zumindest teilweise an die Anforderungen im Gesamtsystem Head-up-Display angepasst.

Die Erfindung erlaubt eine Gestaltung des zumindest einen ersten optischen Elements derart, dass dessen optische Wirkung Insbesondere auf den Anwendungsfall des Betriebs der ersten Teilvorrichtung als externe Projektionsvorrichtung abgestimmt ist. Beispielsweise kann das zumindest eine erste optische Element als herkömmliches Projektor-Objektiv ausgebildet sein. Alternativ kann das zumindest eine erste optische Element ähnlich einem herkömmlichen Projektor-Objektiv ausgebildet sein, was ebenfalls unter anderem eine kostengünstige Herstellung erlaubt.

Durch die zumindest teilweise Kompensation einer optischen Wirkung des zumindest einen ersten optischen Elements mittels des zumindest einen zweiten optischen Elements kann die Funktion der Gesamtvorrichtung als Projektionsvorrichtung im Kraftfahrzeug sichergestellt werden. Es kann insbesondere vorteilhaft die Wirkung des zumindest einen ersten optischen Elements durch das zumindest eine zweite optische Element derart teilweise kompensiert werden, dass beide Elemente gemeinsam die Wirkung herkömmlicher optischer Elemente eines Head-up-Displays haben.

Das zumindest eine erste optische Element kann angesichts der nachfolgenden Kompensation bzw. Frontscheibenanpassung auch eine - vorzugsweise auf den Betrieb als externe Projektionsvorrichtung abgestimmte - optische Wirkung haben, die anders ausgeprägt ist, als dies ohne das Vorhandensein des im Strahlengang nachfolgenden zumindest einen zweiten optischen Elements vertretbar bzw. notwendig wäre, um eine bestimmungsgemäße Funktion der Gesamtvorrichtung zu gewährleisten. Beispielsweise kann eine etwaige Streuwirkung oder Sammelwirkung des ersten optischen Elements stärker ausgeprägt sein, als dies ohne das Vorhandensein des zweiten optischen Elements vertretbar bzw. notwendig wäre. Das zumindest eine zweite optische Element kompensiert diese optische Wirkung dann vorzugsweise zumindest teilweise derart, dass die bestimmungsgemäße Funktion der Gesamtvorrichtung gewährleistet ist, bzw. es passt die vom ersten optischen Element erzeugte reale oder virtuelle Zwischenabbildung an die geometrischen Erfordernisse des Fahrzeugs an, so dass im Zusammenwirken mit einem dritten optischen Element, z.B. einem Umlenkspiegel, nach Projektion auf die Windschutzscheibe des Fahrzeugs ein weitgehend unverzerrtes Bild im gewünschten Projektionsabstand entsteht.

Statt der Verwendung der Windschutzscheibe des Fahrzeugs als Combiner kann auch ein zusätzlicher Combiner Verwendung finden. Das zumindest eine zweite optische Element passt dann die vom ersten optischen Element erzeugte reale oder virtuelle Zwischenabbildung vorzugsweise derart an die geometrischen Erfordernisse des Fahrzeugs und des zusätzlichen Combiners an, dass - ggf. im Zusammenwirken mit einem dritten optischen Element, z.B. einem Umlenkspiegel - nach Projektion auf den Combiner ein weitgehend unverzerrtes und gerades Bild im gewünschten Projektionsabstand entsteht.

Die Bilderzeugungsvorrichtung kann in den verschiedenen bekannten Bauarten ausgeführt werden, also z.B. Lichtquelle mit Transmissionsdisplay, Lichtquelle mit Reflexionsdisplay, selbstleuchtendes Display und scannendes Projektionssystem, wie z.B. Laserprojektor. Sie kann also beispielsweise eine Lichtquelle und ein teiltransparentes Display umfassen, das wiederum beispielsweise als TFT-Display ausgebildet sein kann. Die Bilderzeugungsvorrichtung kann, ebenso wie die von ihr umfasste Lichtquelle und das Display, im Wesentlichen genauso ausgestaltet sein wie bei einem herkömmlichen Head-up-Display. Typischerweise werden bei einer Bilderzeugungsvorrichtung eines Head-up-Displays Bilddaten unter Verwendung eines teiltransparenten Displays in ein Bild umgewandelt. Durch eine Durchleuchtung des teiltransparenten Displays mittels einer Lichtquelle werden Lichtstrahlen erzeugt, welche die optische Information des Bildes enthalten.

An die Leuchtstärke der Lichtquelle eines als externe Projektionsvorrichtung dienenden Projektors werden häufig geringere Anforderungen gestellt als an die Leuchtstärke der Lichtquelle eines Head-up-Displays. Sollten im Betrieb der Gesamtvorrichtung als Head-up-Display im Kraftfahrzeug Abstriche bezüglich der maximal erreichbaren Bildhelligkeit akzeptiert werden, so kann die Lichtquelle auch die Leuchtstärke einer herkömmlichen Projektor-Lichtquelle besitzen. Dies erlaubt einen kostengünstigen Aufbau der Gesamtvorrichtung. Die Lichtquelle kann insbesondere als Projektor-Lichtquelle der Art wie sie in konventionellen Video-Beamern bzw. Pocket-Video-Beamern verwendet wird ausgebildet sein.

Alternativ kann die Helligkeit des Gesamtsystems für den primären Anwendungsfall (Einsatz im Kraftfahrzeug) mit dem höchsten Lichtbedarf ausgelegt sein und für den sekundären Fall (Einsatz als portabler Beamer) abgedimmt werden.

Das Display der erfindungsgemäßen Vorrichtung kann vorteilhaft als herkömmliches Display der in konventionellen Video-Beamern bzw. Pocket-Video-Beamern verwendeten Art ausgebildet sein. Dies erlaubt ebenfalls einen kostengünstigen Aufbau der Gesamtvorrichtung. Das Display kann insbesondere eine gängige Video-Projektions-Bildauflösung (z.B. XGA) besitzen. Dadurch können sowohl im Betrieb der Gesamtvorrichtung als Head-up-Display im Kraftfahrzeug als auch im Betrieb der ersten Teilvorrichtung als externe Projektionsvorrichtung alle relevanten Bildinhalte in ausreichender Auflösung dargestellt werden.

Um die erste Teilvorrichtung aus dem Kraftfahrzeug herausnehmen und sie als externe Projektionseinrichtung, z.B. als Pocket-Video-Beamer verwenden zu können, ist sie vorzugsweise mit einer Standard-Grafik-Schnittstelle ausgerüstet. Vorzugsweise bezieht die Gesamtvorrichtung beim Betrieb als Head-up-Display im Kraftfahrzeug die anzuzeigenden Bilddaten ebenfalls über diese Standard-Grafik-Schnittstelle. Es muss dann keine separate Grafik-Schnittstelle vorgesehen werden. Grundsätzlich ist es jedoch auch möglich, eine erste Grafik-Schnittstelle für den Betrieb als externe Projektionseinrichtung vorzusehen und eine zusätzliche zweite Grafik-Schnittstelle für den Betrieb der Gesamtvorrichtung als Head-up-Display im Kraftfahrzeug.

Insbesondere kann die Gratik-Schnittstelle vorteilhaft auch derart ausgeführt werden, dass anzuzeigende Bilddaten zumindest im Betrieb als externe Projektionsvorrichtung drahtlos von einer externen Recheneinheit (z.B. PC, Laptop, PDA, PNA oder ein anderes so genanntes Consumer-Electronics-Gerät), die dem Kraftfahrzeug oder der Projektionsvorrichtung nicht dauerhaft zugeordnet ist, empfangen werden können. Somit kann besonders einfach eine Datenverbindung zwischen der Recheneinheit und der als externe Projektionsvorrichtung dienenden ersten Teilvorrichtung hergestellt werden.

Die erste Teilvorrichtung kann auch eine interne Recheneinheit umfassen, die zunächst drahtlos Bilddaten von einer dem Kraftfahrzeug oder der Projektionsvorrichtung nicht dauerhaft zugeordneten externen Recheneinheit (z.B. PC, Laptop, PDA oder PNA) empfängt, diese gegebenenfalls umwandelt oder aufbereitet und dann leitungsgebunden an die Bilderzeugungseinheit übermittelt. Die drahtlose Verbindung zwischen der externen Recheneinheit und der internen Recheneinheit kann dann beispielsweise eine WLAN-Verbindung oder eine andere standardisierte drahtlose Verbindung (z.B. Bluetooth) sein.

Ebenso kann es bei leitungsgebundener Verbindung der ersten Teilvorrichtung mit der externen Recheneinheit vorteilhaft sein, eine interne Recheneinheit bei der ersten Teilvorrichtung vorzusehen, welche Bilddaten von der externen Recheneinheit empfängt, diese gegebenenfalls umwandelt oder aufbereitet und dann leitungsgebunden an die Bilderzeugungseinheit übermittelt. Die leitungsgebundene Verbindung zwischen der externen Recheneinheit und der internen Recheneinheit kann dann beispielsweise eine LAN-Verbindung oder eine andere standardisierte leitungsgebundene Verbindung (z.B. USB) sein. Die als externe Projektionsvorrichtung dienende erste Teilvorrichtung kann somit leicht in bestehende Netzwerke eingebunden werden, z.B. in Heim-Netzwerke und/oder Büro-Netzwerke.

Wenn die Grafik-Schnittstelle - direkt oder vermittelt über eine interne Recheneinheit - auch im Betrieb beider Teilvorrichtungen als Gesamtvorrichtung Daten von einer externen Recheneinheit empfangen kann, kann auch das Head-up-Display im Kraftfahrzeug verwendet werden, um Bilddaten der externen Recheneinheit (z.B. Fahrzeugdaten, Text-Dokumente, Emails oder Video-Filme) anzuzeigen. Besonders vorteilhaft ist es bei solcher Ausgestaltung, wenn die Bilddaten der externen Recheneinheit im Betrieb beider Teilvorrichtungen als Gesamtvorrichtung wahlweise anstelle von leitungsgebunden empfangenen Bilddaten eines Bordrechners des Kraftfahrzeugs anzeigbar sind, und wenn einem Nutzer des Fahrzeugs die Möglichkeit gegeben wird, auszuwählen, welche Bilddaten als virtuelles Bild in die Windschutzscheibe eingespiegelt werden sollen - die des Bordrechners oder die der externen Recheneinheit. Die Auswahl des Benutzers kann dabei beispielsweise durch ein Bedienelement oder durch Sprachsteuerung erfolgen.

Gemäß einer bevorzugten Ausführungsform der vorliegenden Erfindung umfasst die erste Teilvorrichtung nur eine einzige als Standard-Grafik-Schnittstelle ausgebildete Grafik-Schnittstelle. Besonders vorteilhaft ist dann eine Ausführungsform der vorliegenden Erfindung, bei der diese Grafik-Schnittstelle beim Betrieb der Gesamtvorrichtung als Head-up-Display des Kraftfahrzeugs von einem von der zweiten Teilvorrichtung umfassten Grafik-Ausgang gespeist wird. Vorzugsweise ist der von der zweiten Teilvorrichtung umfasste Grafik-Ausgang mit einem ebenfalls von der zweiten Teilvorrichtung umfassten Bordrechner des Kraftfahrzeugs verbunden bzw. umfasst eine eigene Recheneinheit, die die Signalaufbereitung zwischen dem Bordrechner des Kraftfahrzeugs und der Gesamtvorrichtung übernimmt.

Vorzugsweise ist die erste Teilvorrichtung mit einer Spannungsversorgungs-Schnittstelle versehen, über die sie im Betrieb als externe Projektionsvorrichtung mit Spannung versorgbar ist. Vorteilhaft kann die erste Teilvorrichtung auch im Betrieb beider Teilvorrichtungen als Gesamtvorrichtung über diese Spannungsversorgungs-Schnittstelle mit Spannung versorgt werden. Vorzugsweise wird in diesem Fall Spannung auf dem Pegel einer typischen KFZ-Bordspannung in die Spannungsversorgungs-Schnittstelle eingespeist. Im Kraftfahrzeug steht eine solche Bordspannung ohnehin zur Verfügung. Im Betrieb als externe Projektionsvorrichtung kann eine Gleichspannung auf entsprechendem Spannungspegel durch Zwischenschalten eines Netzteils erzeugt werden.

Die Spannungsversorgungs-Schnittstelle der ersten Teilvorrichtung kann auch so gewählt werden, dass sie für den mobilen (externen) Gebrauch optimiert ist. Die ggf. notwendige Anpassung der Spannung zwischen Fahrzeug und der ersten Teilvorrichtung wird dann vorzugsweise von der Elektronik der zweiten Teilvorrichtung übernommen.

Die erste Teilvorrichtung kann grundsätzlich auch einen Energiespeicher aufweisen, der zumindest kurzzeitig einen Betrieb als externe Projektionsvorrichtung unabhängig von einer externen Spannungsquelle erlaubt.

Ebenso kann die erste Teilvorrichtung eine erste Spannungsversorgungs-Schnittstelle für die Energiezufuhr im Betrieb als externe Projektionsvorrichtung aufweisen und eine zusätzliche zweite Spannungsversorgungs-Schnittstelle für den Betrieb der ersten Teilvorrichtung als Teil der Gesamtvorrichtung im Kraftfahrzeug. Die erste Spannungsversorgungs-Schnittstelle kann dann vorteilhaft so ausgestaltet werden, dass die erste Teilvorrichtung komfortabel unmittelbar an ein Wechselstromnetz, z.B. zu Hause oder im Büro, angeschlossen werden kann.

Gemäß einer bevorzugten Ausführungsform der vorliegenden Erfindung umfasst die erste Teilvorrichtung nur eine einzige Spannungsversorgungs-Schnittstelle. Besonders vorteilhaft ist dann eine Ausführungsform der vorliegenden Erfindung, bei der diese Spannungsversorgungs-Schnittstelle beim Betrieb der Gesamtvorrichtung als Head-up-Display des Kraftfahrzeugs von einem von der zweiten Teilvorrichtung umfassten Spannungs-Ausgang gespeist wird. Vorzugsweise ist der von der zweiten Teilvorrichtung umfasste Spannungs-Ausgang elektrisch mit einem Spannungs-Eingang der zweiten Teilvorrichtung verbunden, d.h. die Versorgungsspannung am Eingang der zweiten Teilvorrichtung wird von der zweiten Teilvorrichtung zur ersten Teilvorrichtung bereitgestellt, im einfachsten Fall einfach "durchgeschleift".

Die aus dem von der zweiten Teilvorrichtung umfassten zumindest einen zweiten optischen Element austretenden Lichtstrahlen werden vorzugsweise über einen ebenfalls von der zweiten Teilvorrichtung umfassten Umlenkspiegel zur Windschutzscheibe umgelenkt, um das virtuelle Bild im Blickfeld des Fahrers entstehen zu lassen.

Im Strahlengang der Lichtstrahlen nach dem zumindest einen zweiten optischen Element, jedoch noch vor dem Umlenkspiegel angeordnet, kann die zweite Teilvorrichtung ferner eine Diffusorscheibe bzw. Mattscheibe aufweisen, die entweder im Auflichtprinzip oder im Durchlichtprinzip mit den aus dem zumindest einen zweiten optischen Element austretenden Lichtstrahlen beleuchtet wird. Alternativ kann eine solche Diffusorscheibe bzw. Mattscheibe im Strahlengang der Lichtstrahlen auch vor dem zweiten optischen Element angeordnet sein.

Durch die Verwendung der Diffusorscheibe bzw. Mattscheibe wird unter anderem eine vom Betrachter als homogen empfundene Bildausleuchtung des virtuellen Bildes erreicht, das dem Fahrer des Kraftfahrzeugs dargestellt wird. Im Betrieb der ersten Teilvorrichtung als externe Projektionseinrichtung hingegen ist eine solche Diffusorscheibe bzw. Mattscheibe verzichtbar. Die Diffusorscheibe bzw. Mattscheibe ist daher in der zweiten Teilvorrichtung vorgesehen, was einen besonders kompakten und robusten Aufbau der ersten Teilvorrichtung erlaubt.

Vorzugsweise ist die erste Teilvorrichtung durch eine fahrzeugfeste Halterung in vorgegebener relativer Position und Ausrichtung bezüglich der zweiten Teilvorrichtung anbringbar. Die erste Teilvorrichtung ist mechanisch aus dem Kraftfahrzeug herausnehmbar. Zum Einbringen der ersten Teilvorrichtung in das Kraftfahrzeug, besitzt die Innenausstattung des Kraftfahrzeugs vorzugsweise eine z.B. als Ausnehmung geformte Haltevorrichtung, die geeignet gestaltet ist, um die erste Teilvorrichtung zu haltern. Durch die Halterung wird eine bestimmte Position und Ausrichtung der ersten Teilvorrichtung im Kraftfahrzeuginneren vorgegeben. Die Halterung erfolgt vorzugsweise derart, dass das zumindest eine erste optische Element der ersten Teilvorrichtung genau so auf das zumindest eine zweite optische Element der kraftfahrzeugfesten zweiten Teilvorrichtung ausgerichtet wird, dass das zumindest eine erste optische Element und das zumindest eine zweite optische Element gemeinsam die gewünschte optische Wirkung entfalten können.

Wenn die erste Teilvorrichtung in die Halterung eingebracht ist, z.B. eingesteckt, eingelegt, eingesetzt oder eingeschoben, ist sie dort vorzugsweise mechanisch verriegelt. Vorteilhafterweise kann eine solche Verriegelung nur gelöst werden, um die erste Teilvorrichtung herauszunehmen, wenn die aus den beiden Teilvorrichtungen bestehende Gesamtvorrichtung nicht gerade als Head-up-Display betrieben wird. Alternativ kann eine solche Verriegelung auch derart gestaltet werden, dass sie nur dann gelöst werden kann, wenn das gesamte Kraftfahrzeug außer Betrieb ist (erkennbar z.B. am Schaltzustand der Zündung).

Die erste Teilvorrichtung kann diebstahlgesichert sein, indem sie nur dann als externe Projektionseinrichtung verwendbar ist, wenn die Entnahme aus dem Kraftfahrzeug nach bestimmten Vorgaben erfolgt bzw. erfolgt ist. Beispielsweise kann die zerstörungsfreie Entnahme nur dann möglich sein, wenn der Entnehmer über einen bestimmten Code verfügt und/oder im Besitz eines bestimmten Schlüssels ist. Der Schlüssel kann auch der Fahrzeugschlüssel sein. Der genannte Code kann in einem Fahrzeugschlüssel oder einer Codekarte gespeichert sein. Alternativ kann die zerstörungsfreie Entnahme zwar bedingungslos möglich sein, jedoch der externe Betrieb eine Codeeingabe erfordern. Die Codeeingabe kann manuell oder elektronisch drahtlos erfolgen. Eine Diebstahlsicherung kann auch erreicht werden, indem die Möglichkeit des externen Betriebs der ersten Teilvorrichtung zeitlich begrenzt ist und eine Verlängerung des zur Verfügung stehenden Nutzungszeitraums ein erneutes Einsetzen der ersten Teilvorrichtung in das Kraftfahrzeug erfordert.

Vorzugsweise sind die erste und die zweite Teilvorrichtung durch elektrische Verbindungen miteinander verbindbar und die elektrischen Verbindungen werden beim Einbringen der ersten Teilvorrichtung in die Halterung automatisch hergestellt und beim Herausnehmen der ersten Teilvorrichtung aus der Halterung automatisch gelöst. Gemäß einer bereits zuvor beschriebenen bevorzugten Ausführungsform der vorliegenden Erfindung umfassen die genannten elektrischen Verbindungen die Verbindung eines Grafik-Ausgangs der zweiten Teilvorrichtung mit einer Grafik-Schnittstelle der ersten Teilvorrichtung sowie die Verbindung eines Spannungs-Ausgangs der zweiten Teilvorrichtung mit einer Spannungsversorgungs-Schnittstelle der ersten Teilvorrichtung.

Um eine zerstörungsfreie Trennung der elektrischen Verbindungen beim Herausnehmen der ersten Teilvorrichtung zu erlauben, dienen als elektrische Verbindungselemente zwischen der ersten und der zweiten Teilvorrichtung vorzugsweise eine oder mehrere Steckverbindungen, deren Steckrichtung auf eine Bewegungsrichtung abgestimmt ist, in der die erste Teilvorrichtung in die Halterung eingesteckt, eingelegt, eingesetzt oder eingeschoben werden kann. Die Halterung dient dann also nicht nur der mechanischen Halterung der ersten Teilvorrichtung, sondern auch als Führung für die Herstellung der elektrischen Verbindungen zwischen den beiden Teilvorrichtungen.

Zwischen der ersten und der zweiten Teilvorrichtung kann auch vorteilhaft eine weitere elektrische Verbindung vorgesehen sein, die im Betrieb beider Teilvorrichtungen als Gesamtvorrichtung eine Holligkeitsregelung des virtuellen Bildes erlaubt. Dazu kann die zweite Teilvorrichtung einen Helligkeitssensor zur Bestimmung der Umgebungshelligkeit aufweisen oder - sofern verfügbar - ein diesbezügliches Signal aus dem Fahrzeugdatennetz lesen. Die Bilderzeugungseinrichtung der ersten Teilvorrichtung kann in an sich bekannter Art und Weise derart ausgeführt sein, dass die Bildhelligkeit in Abhängigkeit von der Umgebungshelligkeit anpassbar ist. Die für die Helligkeitsregelung vorgesehene elektrische Verbindung zwischen den beiden Teilvorrichtungen wird vorzugsweise ebenso automatisch getrennt, wenn die erste Teilvorrichtung aus der Halterung entnommen wird.

Auch für sonstige Zwecke können zwischen der ersten und der zweiten Teilvorrichtung weitere elektrische Verbindungen vorgesehen sein, die automatisch getrennt werden, wenn die erste Teilvorrichtung aus der Halterung entnommen wird. Diese elektrischen Verbindungen können auch einem Datenfluss von der ersten zur zweiten Teilvorrichtung dienen. Beispielsweise können Werte einer Objektiveinstellung der ersten Teilvorrichtung an die zweite Teilvorrichtung kommuniziert werden, um die Kompensationswirkung des zumindest einen optischen Elements der zweiten Teilvorrichtung abhängig von dieser Objektiveinstellung geeignet einzustellen.

Alternativ kann im Falle eines einstellbaren Objektivs der ersten Teilvorrichtung bei der Halterung ein Mechanismus vorgesehen sein, der das Objektiv automatisch in eine vorgegebene Einstellung versetzt, wenn die erste Teilvorrichtung in die Halterung eingebracht wird. Es kann auch die Halterung so gestaltet sein, dass die erste Teilvorrichtung nur dann mechanisch in die Halterung eingesetzt werden kann, wenn das Objektiv eine bestimmte Einstellung aufweist. Es kann auch die erste Teilvorrichtung ohne einstellbares Objektiv in einer Low-Cost-Version verwendet werden.

Wiederum alternativ kann das Einbringen der ersten Teilvorrichtung elektronisch durch die erste Teilvorrichtung detektierbar sein, beispielsweise anhand des vorzugsweise mit dem Einbringen automatisch hergestellten Anschlusses eines Grafik-Ausgangs der zweiten Teilvorrichtung an die erste Teilvorrichtung, und das Objektiv der ersten Teilvorrichtung wird auf die Detektion des Einbringens hin automatisch in eine bestimmte Einstellung versetzt.

Im Folgenden wird anhand der beigefügten Zeichnungen ein bevorzugtes Ausführungsbeispiel der Erfindung beschrieben. Daraus ergeben sich weitere Details, bevorzugte Ausführungsformen und Weiterbildungen der Erfindung. Im Einzelnen zeigen jeweils schematisch
- Fig. 1: ein aus zwei Teilvorrichtungen bestehendes Head-up-Display in einem Kraftfahrzeug und
- Fig. 2: eine der beiden Teilvorrichtungen im Betrieb als externe Projektionseinrichtung.

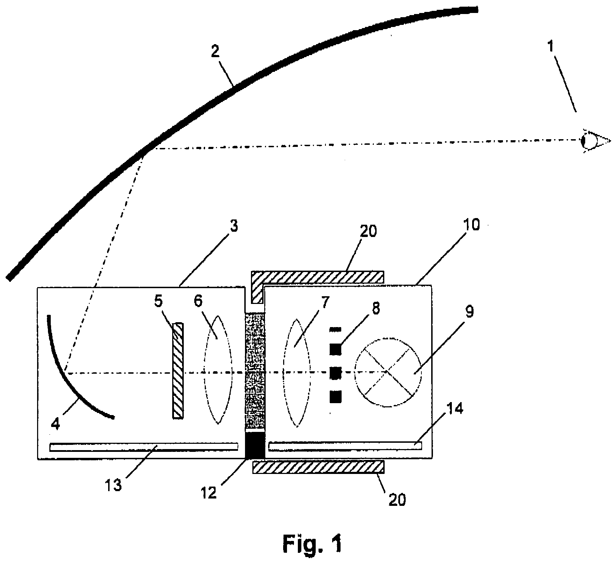

Fig. 1 zeigt schematisch ein aus zwei Teilvorrichtungen (3, 10) bestehendes Head-up-Display in einem Kraftfahrzeug.

Das Head-up-Display dient zur Darstellung von optischen Informationen mittels Einspiegelung eines virtuellen Bildes in das Blickfeld des Fahrers 1 des Kraftfahrzeugs.

Das Head-up-Display besteht als Gesamtvorrichtung aus einer ersten lösbar mit dem Kraftfahrzeug verbundenen Teilvorrichtung (10) und einer zweiten fahrzeugfesten Teilvorrichtung (3).

Die erste Teilvorrichtung 10 umfasst eine Bilderzeugungseinrichtung (8, 9) zur Erzeugung von die optische Information enthaltenden Lichtstrahlen. Die Bilderzeugungsquelle wird hier beispielhaft gebildet von einer Projektorlampe 9 und einem vor dieser Projektorlampe angeordneten TFT-Display 8.

Optische Elemente (4, 5, 6, 7) beeinflussen den Strahlengang der Lichtstrahlen zwischen der Bilderzeugungseinrichtung (8,9) und der als Combiner wirkenden Windschutzscheibe 2 des Kraftfahrzeugs.

Ein als Objektiv ausgebildetes optisches Element 7 ist Bestandteil der ersten Teilvorrichtung 10. Dieses optische Element 7 kann selbst wiederum aus einem oder mehreren optischen Elementen bestehen. Die anderen abgebildeten optischen Elemente (4, 5, 6) sind Bestandteile der zweiten Teilvorrichtung 3. Dabei handelt es sich um eine Linse 6 (die ebenfalls selbst wiederum aus einem oder mehreren optischen Elementen bestehen kann), eine Projektionsscheibe 5 (bzw. ein anderes optisches Element, auf das das Bild der ersten optischen Einheit projiziert werden kann) und einen Umlenkspiegel 4. Die Linse 6 beeinflusst die aus dem Objektiv 7 austretenden Lichtstrahlen derart, dass sie flächenfüllend auf die Projektionsscheibe 5 auftreffen. Der Umlenkspiegel 4 spiegelt das auf der Rückseite der Projektionsscheibe 5 durchscheinende Bild über die Windschutzscheibe 2 in das Blickfeld des Fahrers 1 ein.

Das optische Konzept kann auch so gewählt werden, dass in der zweiten Teilvorrichtung 3 kein reales Bild auf der Projektionsscheibe entsteht, sondern ein virtuelles Zwischenbild. In diesem Fall wird die Projektionsscheibe durch ein optisches System ersetzt.

Die erste Teilvorrichtung 10 ist wahlweise außerhalb des Kraftfahrzeugs unabhängig von der zweiten Teilvorrichtung 3 als externe Projektionsvorrichtung betreibbar oder im Kraftfahrzeug im Zusammenwirken mit der zweiten Teilvorrichtung 3.

Für den Betrieb in der Gesamtvorrichtung, die beide Teilvorrichtungen (3, 10) umfasst, kann die erste Teilvorrichtung 10 In eine Halterung 20 eingebracht werden, die im Kraftfahrzeuginneren zur Aufnahme der ersten Teilvorrichtung 10 vorgesehen ist.

Durch die Halterung 20 wird sichergestellt, dass das Objektiv 7 der ersten Teilvorrichtung 10 in eine relative Position und Ausrichtung bezüglich der anderen optischen Elemente 4, 5 und 6 gebracht wird, die genau den oben beschriebenen Strahlengang sicherstellt. Die optischen Elemente 4, 5 und 6 sind Bestandteile der zweiten Teilvorrichtung 3 und sind somit ohnehin fahrzeugfest angebracht.

Die Abstrahlcharakteristik des Objektivs 7 ist im Wesentlichen auf den Betrieb als externe Projektionseinrichtung abgestimmt. Typischerweise hat solch ein externer Projektor eine Abstrahlcharakteristik, die in ca. 1 Meter Entfernung eine Bildgröße von ca. 0,5 bis 1 Meter Bilddiagonale erreicht. Für den Betrieb der ersten Teilvorrichtung als externe Projektionseinrichtung sind somit keine wesentlichen Veränderungen erforderlich.

Im Betrieb der Gesamtvorrichtung, die beide Teilvorrichtungen (3, 10) umfasst, wird die Wirkung des Objektivs 7 jedoch durch die Linse 6 teilweise kompensiert. Die Linse 6 passt die vom Objektiv 7 erzeugte Zwischenabbildung an die geometrischen Erfordernisse des Fahrzeugs an, so dass in Kombination mit dem Umlenkspiegel 4 nach Projektion auf die Windschutzscheibe des Fahrzeugs ein weitgehend unverzerrtes und gerades Bild im gewünschten Projektionsabstand entsteht. Es ergibt sich somit eine Gesamtwirkung der optischen Elemente 6 und 7, die der Wirkung des entsprechenden Teils der Optik eines gewöhnlichen Head-up-Displays entspricht. Erst durch die Kompensationswirkung der Linse 6 kann also die erste Teilvorrichtung 10 mit einem Objektiv 7 mit solch großem Öffnungswinkel ausgerüstet werden, ohne die Funktion der Gesamtvorrichtung zu beeinträchtigen.

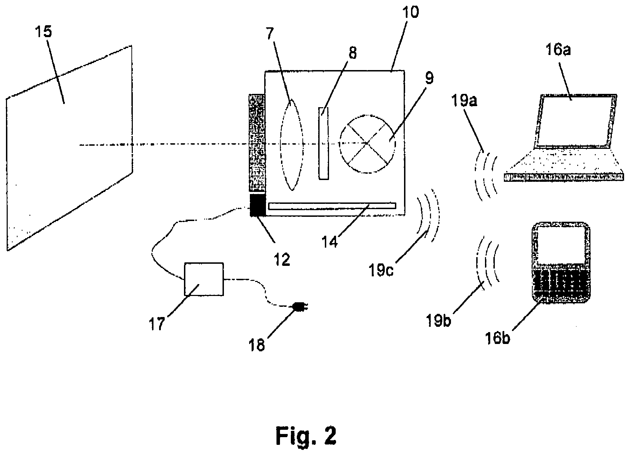

Im Betrieb der ersten Teilvorrichtung 10 als externe Projektionseinrichtung, dargestellt in Fig. 2, treffen die aus dem Objektiv 7 austretenden Lichtstrahlen unmittelbar auf eine Projektionsfläche 15.

Die erste Teilvorrichtung 10 umfasst eine Elektronik-Schaltung 14, die unter anderem einen Spannungsversorgungs-Eingang besitzt, zur Ansteuerung der Lichtquelle 9 dient, einen leitungsgebundenen Grafik-Eingang aufweist und eine drahtlose Grafik-Schnittstelle aufweist.

Die zweite Teilvorrichtung 3 umfasst eine Elektronik-Schaltung 13, die unter anderem einen Spannungsversorgungs-Eingang besitzt, einen Spannungsversorgungs-Ausgang besitzt, einen Grafik-Eingang besitzt und einen Grafik-Ausgang besitzt.

Der Spannungsversorgungs-Eingang der Elektronik-Schaltung 13 ist mit einer Bordspannung des Kraftfahrzeugs verbunden. Der Grafik-Eingang der Elektronik-Schaltung 13 ist mit einem Bordrechner des Kraftfahrzeugs verbunden. Der Grafik-Ausgang der Elektronik-Schaltung 13 ist direkt mit dem Grafik-Eingang verbunden. Die Bilddaten des Bordrechners liegen somit am Grafik-Ausgang der Elektronik-Schaltung 13 an. Der Spannungsversorgungs-Ausgang der Elektronik-Schaltung 13 ist mit dem Spannungsversorgungs-Eingang verbunden. Die Bordspannung liegt somit entweder direkt am Spannungsversorgungs-Ausgang der Elektronik-Schaltung 13 an, oder sie wird in der Elektronik-Schaltung 13 für die Elektronik-Schaltung 14 speziell aufbereitet.

Durch elektrische Verbindungen 12 sind die erste und die zweite Teilvorrichtung miteinander verbindbar. Die elektrischen Verbindungen 12 werden beim Einbringen der ersten Teilvorrichtung 10 in die Halterung 20 automatisch hergestellt und beim Herausnehmen der ersten Teilvorrichtung 10 aus der Halterung 20 automatisch gelöst. Als Verbindungselemente können z.B. Steckkontakte dienen, deren Steckrichtung der Richtung entspricht, in der die erste Teilvorrichtung 10 in die Halterung 20 eingeschoben wird.

Wenn die erste Teilvorrichtung 10 in die Halterung eingebracht ist, verbinden die elektrischen Verbindungen 12 den Spannungsversorgungs-Ausgang der Elektronik-Schaltung 13 mit dem Spannungsversorgungs-Eingang der Elektronik-Schaltung 14, um die erste Teilvorrichtung mit Spannung zu versorgen. Zudem verbinden, wenn die erste Teilvorrichtung in die Halterung eingebracht ist, die elektrischen Verbindungen 12 den Grafik-Ausgang der Elektronik-Schaltung 13 mit dem leitungsgebundenen Grafik-Eingang der Elektronik-Schaltung 14, um die Bilddaten des Bordrechners mittels der Bilderzeugungseinrichtung (8,9) darzustellen.

Um die erste Teilvorrichtung 10 als externe Projektionseinrichtung zu betreiben, kann an den Spannungsversorgungs-Eingang der Elektronik-Schaltung 14 auch ein Netzteil 17 angeschlossen werden, das bei Anschluss an ein Stromnetz über einen Stecker 18 in etwa den Spannungspegel der Bordspannung an den Spannungsversorgungs-Eingang der Elektronik-Schaltung 14 anlegt. Zum Empfang von Bilddaten für die Bilderzeugungseinrichtung (8,9) kann im Betrieb der ersten Teilvorrichtung 10 als externe Projektionseinrichtung die drahtlose Grafik-Schnittstelle der Elektronik-Schaltung 14 dienen. Über diese drahtlose Grafik-Schnittstelle kann im Betrieb der ersten Teilvorrichtung 10 als externe Projektionseinrichtung beispielsweise ein Notebook 16a oder ein PDA 16b an die erste Teilvorrichtung angeschlossen werden. Diese alternativen Möglichkeiten der drahtlosen Verbindung sind in Fig. 2 durch die Wellensymbole 19a, 19b und 19c dargestellt. Die Wellensymbole 19a, 19c repräsentieren eine mögliche drahtlose Verbindung mit dem Notebook 16a. Die Wellensymbole 19b, 19c repräsentieren eine mögliche drahtlose Verbindung mit dem PDA 16b.

Die erste Teilvorrichtung 10 stellt im Betrieb als externe Projektionseinrichtung somit einen vollwertigen Pocket-Video-Beamer dar.

Wahlweise kann statt der drahtlosen Grafik-Schnittstelle auch der leitungsgebundene Grafik-Eingang der Elektronik-Schaltung 14 zum Empfang von Bilddaten für die Bilderzeugungseinrichtung (8,9) genutzt werden, wenn die erste Teilvorrichtung 10 als externe Projektionseinrichtung eingesetzt wird. Um dies zu begünstigen, ist der leitungsgebundene Grafik-Eingang als Standard-Grafik-Port ausgeführt, an welchen handelsübliche Consumer-Electronics-Geräte anschließbar sind. Der Grafik-Ausgang der Elektronik-Schaltung 13 ist entsprechend sowohl mechanisch als auch datentechnisch kompatibel als Standard-Grafik-Ausgang ausgeführt.

## Patentansprüche

1. Projektionsvorrichtung zur Darstellung von optischen Informationen mittels Einspiegelung eines virtuellen Bildes in das Blickfeld des Fahrers (1) eines Kraftfahrzeugs, umfassend eine Bilderzeugungseinrichtung (8,9) zur Erzeugung von die optische Information enthaltenden Lichtstrahlen, zumindest ein optisches Element (4, 5, 6, 7) zur Beeinflussung des Strahlengangs der Lichtstrahlen zwischen der Bilderzeugungseinrichtung und einer als Combiner wirkenden Windschutzscheibe (2) des Kraftfahrzeugs,
wobei die Projektionsvorrichtung als Gesamtvorrichtung aus einer ersten lösbar mit dem Kraftfahrzeug verbundenen Teilvorrichtung (10) und einer zweiten fahrzeugfesten Teilvorrichtung (3) besteht, wobei, die erste Teilvorrichtung (10) durch eine fahrzeugfeste Halterung (20) in vorgegebener relativer Position und Ausrichtung bezüglich der zweiten Teilvorrichtung (3) anbringbar ist;
**dadurch gekennzeichnet,**
**dass** die erste Teilvorrichtung (10) zumindest die Bilderzeugungseinrichtung (8, 9) der Gesamtvorrichtung umfasst und außerhalb des Kraftfahrzeugs unabhängig von der zweiten Teilvorrichtung als externe Projektionsvorrichtung betreibbar ist,
**dass** die erste Teilvorrichtung (10) zumindest ein im Betrieb als externe Projektionsvorrichtung wirksames erstes optisches Element (7) umfasst, welches in der Gesamtvorrichtung den Strahlengang der Lichtstrahlen beeinflusst,
**dass** die zweite Teilvorrichtung zumindest ein zweites optisches Element (6) umfasst, welches in der Gesamtvorrichtung den Strahlengang der Lichtstrahlen derart beeinflusst, dass eine optische Wirkung des ersten optischen Elements zumindest teilweise kompensiert wird,
**dass** die erste und die zweite Teilvorrichtung durch elektrische Verbindungen (12) miteinander verbindbar sind und
**dass** die elektrischen Verbindungen (12) beim Einbringen der ersten Teilvorrichtung (10) in die Halterung (20) automatisch hergestellt und beim Herausnehmen der ersten Teilvorrichtung aus der Halterung automatisch gelöst werden.

2. Vorrichtung nach Anspruch 1, **dadurch gekennzeichnet,**
**dass** das zumindest eine erste optische Element (7) als herkömmliches Projektor-Objektiv ausgebildet ist.

3. Vorrichtung nach einem der Ansprüche 1 oder 2, **dadurch gekennzeichnet,**
**dass** die zweite Teilvorrichtung (3) einen Umlenkspiegel (4) zur Umlenkung der aus dem zumindest einen zweiten optischen Element (6) austretenden Lichtstrahlen in Richtung der Windschutzscheibe (2) des Kraftfahrzeugs umfasst.

4. Vorrichtung nach Anspruch 3, **dadurch gekennzeichnet,**
**dass** die zweite Teilvorrichtung (3) eine Projektionsscheibe (5) im Strahlengang zwischen der ersten Teilvorrichtung (10) und dem Umlenkspiegel (4) umfasst.

5. Vorrichtung nach einem der Ansprüche 1 bis 4, **dadurch gekennzeichnet,**
**dass** die erste Teilvorrichtung (10) geeignet ist, im Betrieb als externe Projektionsvorrichtung anzuzeigende Bilddaten drahtlos von einer externen Recheneinheit zu empfangen und mittels der Bilderzeugungseinrichtung (8, 9) darzustellen.

6. Vorrichtung nach einem der Ansprüche 1 bis 4, **dadurch gekennzeichnet,**
**dass** die erste Teilvorrichtung (10) eine einzige leitungsgebundene Grafik-Schnittstelle aufweist, über die sowohl im Betrieb der ersten Teilvorrichtung als externe Projektionsvorrichtung als auch im gemeinsamen Betrieb der ersten und zweiten Teilvorrichtung als Projektionsvorrichtung im Kraftfahrzeug anzuzeigende Bilddaten an die Bilderzeugungseinrichtung (8, 9) übermittelbar sind.

7. Vorrichtung nach Anspruch 6, **dadurch gekennzeichnet,**
**dass** die Grafik-Schnittstelle im gemeinsamen Betrieb der ersten und zweiten Teilvorrichtung als Projektionsvorrichtung im Kraftfahrzeug über eine Steckverbindung mit einem Grafik-Ausgang der zweiten Teilvorrichtung verbunden ist.

8. Vorrichtung nach einem der Ansprüche 1 bis 7, **dadurch gekennzeichnet,**
**dass** die erste Teilvorrichtung (10) eine einzige Spannungsversorgungs-Schnittstelle aufweist, über die Komponenten der ersten Teilvorrichtung sowohl im Betrieb der ersten Teilvorrichtung als externe Projektionsvorrichtung als auch im gemeinsamen Betrieb der ersten und zweiten Teilvorrichtung als Projektionsvorrichtung im Kraftfahrzeug versorgbar sind und
**dass** die Spannungsversorgungs-Schnittstelle im gemeinsamen Betrieb der ersten und zweiten Teilvorrichtung als Projektionsvorrichtung im Kraftfahrzeug über eine Steckverbindung mit einem Spannungs-Ausgang der zweiten Teilvorrichtung verbunden ist.

## Claims

1. A projection device for presenting optical information by reflecting a virtual image into the field of vision of the driver (1) of a motor vehicle, comprising an image generating means (8, 9) for generating light beams which contain the optical information, at least one optical element (4, 5, 6, 7) for influencing the beam path of the light beams between the image generating means and a windscreen (2), acting as a combiner, of the motor vehicle, wherein the projection device consists as a complete device of a first partial device (10) which is connected detachably to the motor vehicle, and of a second partial device (3) which is fixed to the vehicle, wherein the first partial device (10) can be attached by a mounting (20), fixed to the vehicle, in a predetermined relative position and orientation with respect to the second partial device (3),
**characterised in that**
the first partial device (10) comprises at least the image generating means (8, 9) of the complete device and can be operated as an external projection device outside the motor vehicle, independently of the second partial device,
**in that** the first partial device (10) comprises at least a first optical element (7) which is effective in operation as an external projection device and which, in the complete device, influences the beam path of the light beams,
**in that** the second partial device comprises at least a second optical element (6) which, in the complete device, influences the beam path of the light beams such that an optical effect of the first optical element is at least partly compensated,
**in that** the first and the second partial devices can be connected together by electrical connections (12), and
**in that** the electrical connections (12) are established automatically when the first partial device (10) is introduced into the mounting (20) and are automatically disconnected when the first partial device (10) is removed from the mounting.

2. A device according to claim 1, **characterised in that** the at least one first optical element (7) is configured as a conventional projector lens.

3. A device according to either claim 1 or claim 2, **characterised in that** the second partial device (3) comprises a deflection mirror (4) to deflect the light beams, issuing from the at least one second optical element (6), in the direction of the windscreen (2) of the motor vehicle.

4. A device according to claim 3, **characterised in that** the second partial device (3) comprises a projection disc (5) in the beam path between the first partial device (10) and the deflection mirror (4).

5. A device according to any one of claims 1 to 4, **characterised in that**, during operation as an external projection device, the first partial device (10) is capable of wirelessly receiving image data, which are to be displayed, from an external computing unit and to present them by the image generating means (8, 9).

6. A device according to any one of claims 1 to 4, **characterised in that** the first partial device (10) has a single line-bound graphics interface, via which image data which are to be displayed during operation of the first partial device as an external projection device as well as during the joint operation of the first and the second partial device as a projection device in the motor vehicle, can be transmitted to the image generating means (8, 9).

7. A device according to claim 6, **characterised in that** the graphics interface is connected to a graphics output of the second partial device by a plug-in connection during the joint operation of the first and the second partial device as a projection device in the motor vehicle.

8. A device according to any one of claims 1 to 7, **characterised in that** the first partial device (10) has a single power supply interface, via which components of the first partial device can be energised during operation of the first partial device as an external projection device as well as during the joint operation of the first and the second partial device as a projection device in the motor vehicle, and
**In that** the power supply interface is connected to a voltage output of the second partial device by a plug-in connection during the joint operation of the first and the second partial device as a projection device in the motor vehicle.

## Revendications

1. Dispositif de projection permettant de représenter des informations optiques par réflexion d'une image virtuelle dans le champ de vision du conducteur (1) d'un véhicule, comprenant un dispositif de génération d'images (8, 9) permettant de générer des faisceaux de lumière renfermant l'information optique, au moins un élément optique (4, 5, 6, 7) permettant d'influencer la trajectoire optique des faisceaux de lumière entre le dispositif de génération d'images et le pare-brise (2) du véhicule faisant office de multiplexeur, le dispositif de projection étant réalisé sous la forme d'un dispositif global constitué d'un premier dispositif partiel (10) lié de façon amovible au véhicule et d'un second dispositif partiel (3) solidaire du véhicule, le premier dispositif partiel (10) pouvant être positionné sur un premier support (20) solidaire du véhicule dans une position et une orientation relatives prédéfinies par rapport au second dispositif partiel (3),
**caractérisé en ce que**
le premier dispositif partiel (10) comporte au moins le dispositif de génération d'images (8, 9) du dispositif global et peut être actionné en tant que dispositif de projection externe en dehors du véhicule indépendamment du second dispositif partiel, le premier dispositif partiel (10) comprend au moins un premier élément optique (7) actif lors du fonctionnement en tant que dispositif de projection externe (7) qui influence dans le dispositif global la trajectoire optique des faisceaux lumineux,
le second dispositif partiel comprend au moins un second élément optique (6) qui influence dans le dispositif global la trajectoire optique des faisceaux lumineux de sorte que l'action optique du premier élément optique soit au moins partiellement compensée,
le premier et le second dispositifs partiels peuvent être reliés entre eux par des liaisons électriques (12), et
les liaisons électriques (12) sont branchées automatiquement lors de la mise en place du premier dispositif partiel (10) dans le support (20) et sont automatiquement débranchées lors de l'extraction du premier dispositif partiel du support.

2. Dispositif conforme à la revendication 1,
**caractérisé en ce que**
le premier élément optique (7) est réalisé sous la forme d'un objectif de projecteur classique.

3. Dispositif conforme à l'une des revendications 1 et 2,
**caractérisé en ce que**
le second dispositif partiel (3) comprend un miroir de déviation (4) pour permettre de dévier les faisceaux lumineux sortant du second élément optique (6) en direction du pare-brise (2) du véhicule.

4. Dispositif conforme à la revendication 3,
**caractérisé en ce que**
le second dispositif partiel (3) comprend un disque de projection (5) situé dans la trajectoire optique entre le premier dispositif partiel (10) et le miroir de déviation (4).

5. Dispositif conforme à l'une des revendications 1 à 4,
**caractérisé en ce que**
le premier dispositif partiel (10) est adapté pour recevoir lors du fonctionnement en tant que dispositif de projection externe, des données d'images devant être affichées transmises sans fil par une unité de calcul externe, et les représenter au moyen du dispositif de génération d'images (8, 9).

6. Dispositif conforme à l'une des revendications 1 à 4,
**caractérisé en ce que**
le premier dispositif partiel (10) comprend une seule interface graphique liée par une liaison filaire par l'intermédiaire de laquelle lors du fonctionnement du premier dispositif partiel en tant que dispositif de projection externe et également lors du fonctionnement conjoint du premier et du second dispositifs partiels en tant que dispositif de projection dans le véhicule, des données d'images devant être affichées peuvent être transmises au dispositif de génération d'images (8, 9).

7. Dispositif conforme à la revendication 6,
**caractérisé en ce que**
lors du fonctionnement conjoint du premier et du second dispositifs partiels en tant que dispositif de projection dans le véhicule, l'interface graphique est reliée à une sortie graphique du second dispositif partiel par une liaison par enfichage.

8. Procédé conforme à l'une des revendications 1 à 7,
**caractérisé en ce que**
le premier dispositif partiel (10) comporte une seule interface d'alimentation en tension par laquelle des composants du premier dispositif partiel peuvent être alimentés lors du fonctionnement de ce premier dispositif partiel en tant que dispositif de projection externe et également lors du fonctionnement conjoint du premier et du second dispositifs partiels en tant que dispositif de projection dans le véhicule, et
l'interface d'alimentation en tension est reliée, lors du fonctionnement conjoint du premier et du second dispositifs partiels en tant que dispositif de projection dans le véhicule avec une sortie de tension du second dispositif partiel par l'intermédiaire d'une liaison par enfichage.
